Europäisches Patentamt

European Patent Office

Office européen des brevets

(19)

(11) Veröffentlichungsnummer: **0 329 059 B1**

# (12) EUROPÄISCHE PATENTSCHRIFT

(45) Veröffentlichungstag der Patentschrift:
26.06.91 Patentblatt 91/26

(51) Int. Cl.$^5$: **G01M 17/06, G01B 21/26**

(21) Anmeldenummer: 89102473.9

(22) Anmeldetag: 14.02.89

(54) **Verfahren zur Eliminierung des Einflusses des Lenkungsspiels auf die Messung bzw. Einstellung der Vorderradeinzelspur bei Kraftfahrzeugen sowie Einrichtung zur Durchführung des Verfahrens.**

(30) Priorität: 18.02.88 DE 3805035

(43) Veröffentlichungstag der Anmeldung:
23.08.89 Patentblatt 89/34

(45) Bekanntmachung des Hinweises auf die
Patenterteilung:
26.06.91 Patentblatt 91/26

(84) Benannte Vertragsstaaten:
BE DE ES FR GB IT SE

(56) Entgegenhaltungen:
DE-A- 3 119 739
DE-A- 3 642 042
US-A- 3 889 527

(73) Patentinhaber: WECO INDUSTRIETECHNIK
GMBH
August-Bode-Strasse 1
W-3500 Kassel (DE)

(72) Erfinder: Schrammen, Peter, Dr. rer. nat.
Friedrich-Ebert-Ring 50
W-3503 Lohfelden 1 (DE)

(74) Vertreter: Feder, Wolf-Dietrich
Dr. Wolf-D. Feder, Dr. Heinz Feder Dipl.-Ing.
P.-C. Sroka Dominikanerstrasse 37
W-4000 Düsseldorf 11 (DE)

**Beschreibung**

Die Erfindung bezieht sich auf ein Verfahren zur Messung bzw. Einstellung der Vorderradeinzelspur bei Kraftfahrzeugen und auf Einrichtungen zur Durchführung dieses Verfahrens.

An die Einstellung der Spur der Fahrzeugräder bei Kraftfahrzeugen werden seit einigen Jahren immer höhere Anforderungen gestellt, d.h. die Einhaltung immer engerer Toleranzen wird gefordert.

Vorrichtungen zur Vermessung der Achsgeometrie an den Radachsen von Kraftfahrzeugen sind in verschiedenen Ausführungsformen bekannt. Es wird hierzu beispielsweise hingewiesen auf DE-AS 22 04 918, DE-OS 31 36 145, DE-OS 33 23 367 und DE-OS 35 14 759.

Als ein besonderes Problem in diesem Zusammenhang hat sich die Einstellung der Vorderrad-Einzelspur erwiesen. Ein anzustrebendes Ziel besteht nicht nur darin, zur Erzielung optimaler Fahreigenschaften die durch die Konstruktion des Fahrwerks vorgegebene Gesamtspur möglichst genau einzustellen, sondern zusätzlich die Vorderräder so einzustellen, daß bei horizontal stehender Lenkradspeiche das Fahrzeug exakt geradeaus fährt, bzw. daß bei Geradeausfahrt die Lenkradspeiche unter sonst idealen Bedingungen (d.h. kein Seitenwind usw.) exakt horizontal steht.

Zur Erreichung dieses Zieles werden seit einigen Jahren sowohl die Laufrichtung der Hinterräder als auch die momentane Stellung der Lenkradspeiche (bezogen auf die Horizontale) bei der Einstellung der Vorderradeinzelspur berücksichtigt. (S. z.B. DE-OS 31 36 145, S. 4, Z. 24 bis 28 ; S. 6, Z. 9 bis 15). Dies würde theoretisch zum gewünschten Ergebnis führen, wenn die Verbindung zwischen dem Lenkrad und den Vorderrädern also das Lenkgetriebe völlig spielfrei ausgelegt wären. Da in der Praxis eine solche Spielfreiheit nicht zu erreichen ist, bleibt auch bei gewissenhaftester Einstellung der Spur eine Unsicherheit der Lenkradstellung in der Größenordnung des besagten mechanischen Spiels. Die gewünschte genauere Einstellung der Vorderradeinzelspur kann also prinzipiell nicht durch eine weitere Steigerung der Meßgenauigkeit einer Vorrichtung erreicht werden, sondern nur dadurch, daß das Lenkrad während der Spureinstellung exakt in der Mitte des Spielbereiches gehalten wird.

Der Erfindung liegt die Aufgabe zugrunde, ein Verfahren der eingangs und im Oberbegriff des Patentanspruchs 1 erwähnten Art zu schaffen, das bei der Vermessung und/oder der Einstellung der Vorderradeinzelspur bei Kraftfahrzeugen nach bekannten Verfahren mit einsetzbar ist, um den Einfluß des Spiels auf die Genauigkeit der Messung oder der Einstellung zu eliminieren.

Die Lösung dieser Aufgabe geschieht mit den Merkmalen aus dem kennzeichnenden Teil des Patentanspruchs 1. Vorteilhafte Weiterbildungen des erfindungsgemäßen Verfahrens sind in den Ansprüchen 2 und 3 beschrieben.

Einrichtungen zur Durchführung des erfindungsgemäßen Verfahrens sind Gegenstand der Patentansprüche 4, 12 und 13.

Vorteilhafte Ausführungsformen sind in den Patentansprüchen 5 bis 11 beschrieben.

Das erfindungsgemäße Verfahren und die erfindungsgemäßen Einrichtungen sind zusammen mit an sich bekannten Verfahren und Einrichtungen zur Messung und zur Einstellung der Spur einsetzbar.

Der Grundgedanke der Erfindung besteht darin, während der Messung bzw. der Einstellung der Spur dem Lenkrad eine solche Hin- und Herbewegung zu erteilen, daß sich die Lenkung gleichviel am linken wie am rechten Rand des Spielbereiches befindet, im zeitlichen Mittel also gerade in der Mitte des Spielbereiches zu liegen kommt. Zur exakten Einstellung der Spur ist es dann weiterhin nötig, entweder durch geeignete Mittel sicherzustellen, daß die Mittelstellung der Bewegung mit der gewünschten Horizontalstellung der Lenkradspeiche übereinstimmt oder aber die aktuelle Lenkradstellung kontinuierlich mit einer geeigneten Vorrichtung, die unter der Bezeichnung "Lenkradmeßwaage" bekannt ist, zu vermessen und mit der gemessenen Spur zu verrechnen.

Die Einrichtung zur Erzeugung der periodischen Hin- und Herbewegung des Lenkrades kann an das Lenkrad selbst angekoppelt werden. Die Bewegung kann aber ebensogut an der Lenkradachse oder auch an der Spurstange eingeleitet werden.

Im folgenden wird das erfindungsgemäße Verfahren anhand von einigen Ausführungsbeispielen für Einrichtungen zu seiner Durchführung, die in den beigefügten Zeichnungen dargestellt sind, näher erläutert.

In den Zeichnungen zeigen :

Fig. 1 in einer stark schematisierten Darstellung eine am Chassis eines Kraftfahrzeuges angeordnete Vorrichtung zur periodischen Hin- und Herbewegung des Lenkrades ;

Fig. 2 in einer Darstellung analog Fig. 1 eine am Lenkrad angeordnete und sich am Chassis abstützende zweite Ausführungsform einer Vorrichtung zur periodischen Hin- und Herbewegung des Lenkrades ;

Fig. 3 eine dritte Ausführungsform einer Vorrichtung zur periodischen Hin- und Herbewegung des Lenkrades, die am Lenkrad selbst angeordnet ist;

Fig. 4 und 5 weitere Ausführungsformen einer am Lenkrad selbst angeordneten Vorrichtung zur periodischen Hin- und Herbewegung des Lenkrades.

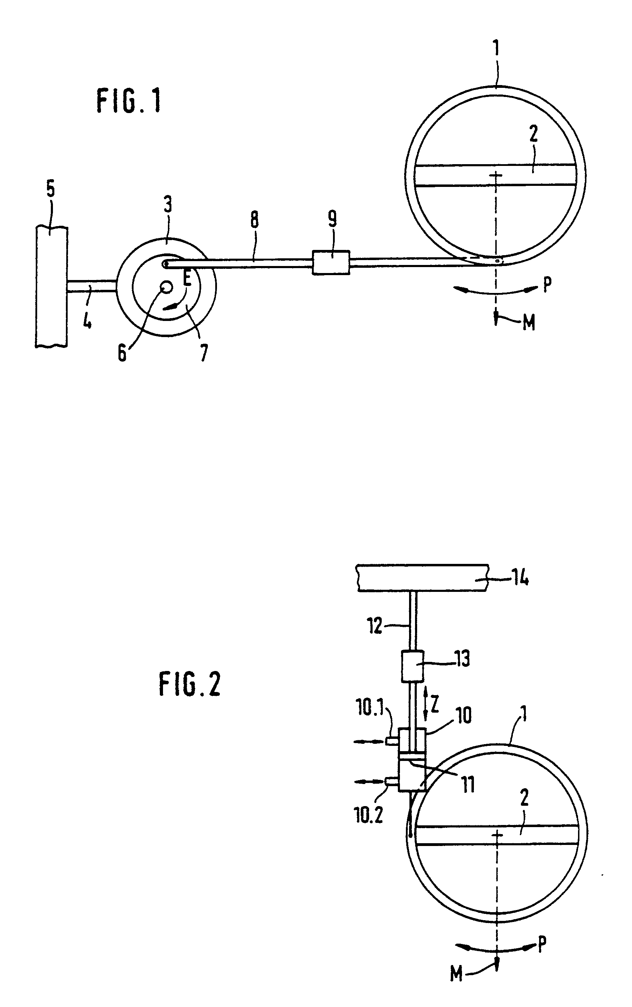

In den Fig. 1 bis 5 sind lediglich die Vorrichtungsteile dargestellt, die zur periodischen Hin- und Herbewegung des Lenkrads dienen. Die Vermessung und Einstellung der Spur selbst geschieht nach an sich bekannten Verfahren und mit an sich bekannten Einrichtungen.

In Fig. 1 ist eine Einrichtung dargestellt, bei der ein Motor 3 über eine Halterung 4 an einem Teil 5 des Kraftfahrzeugs, beispielsweise an der Kraftfahrzeugtür, befestigt ist. Auf der Abtriebswelle 6 des Motors 3 sitzt eine Exzenterscheibe 7, die über eine Schubstange 8 mit dem Lenkrad 1 verbunden ist. Die Länge der Schubstange 8 kann durch eine Verstellvorrichtung 9 einstellbar verändert werden. Wenn die Exzenterscheibe 7 in Pfeilrichtung E in Drehung versetzt wird, wird auf das Lenkrad 1 eine Hin- und Herbewegung in Pfeilrichtung P um eine Mittellage M herum übertragen. Die Amplitude dieser Hin- und Herbewegung ist durch geeignete Wahl des Radius an der Exzenterscheibe 7 so eingestellt, daß sie mindestens so groß ist wie der halbe Wert des Lenkungsspiels. Mit Betätigung der Verstellvorrichtung 9 kann die Mittellage M der Bewegung so eingestellt werden, daß in ihr die Lenkradspeiche 2 genau horizontal eingestellt ist. Der Bezugspunkt bei der Vermessung der Einzelradspur ist dann die Mittellage M des Lenkrads 1.

Der Motor 3 kann als elektrischer oder pneumatischer Motor oder auch als irgendein anderer Mechanismus ausgebildet sein.

Prinzipiell kann an dieser Stelle auch ein Pneumatikzylinder am Chassis angeordnet sein, dessen Kolbenstange über die Schubstange 8 mit dem Lenkrad 1 verbunden ist.

Bei der Ausführungsform nach Fig. 2 ist die Antriebsvorrichtung als Pneumatikzylinder 10 ausgebildet, der am Lenkrad 1 befestigt ist und dem über die Zu/Abführungsanschlüsse 10.1 und 10.2 abwechselnd Druckluft zugeführt wird. Der Kolben 11 des Pneumatikzylinders 10 stützt sich über eine Abstützstange 12, in die eine Verstellvorrichtung 13 eingeschaltet ist, an einem festen Punkt des Kraftfahrzeuges, beispielsweise der Frontscheibe 14, ab.

Die Wirkungsweise dieses Antriebsmechanismus ist analog Fig. 1. Die Relativbewegung zwischen dem Pneumatikzylinder 10 und der Abstützstange 12 in Pfeilrichtung Z verursacht eine Hin- und Herbewegung des Lenkrades 1 in Pfeilrichtung P mit der Mittellage M. Die genaue Ausrichtung der Lenkradspeiche 2 in horizontaler Richtung für die Mittellage M kann an der Verstellvorrichtung 13 vorgenommen werden.

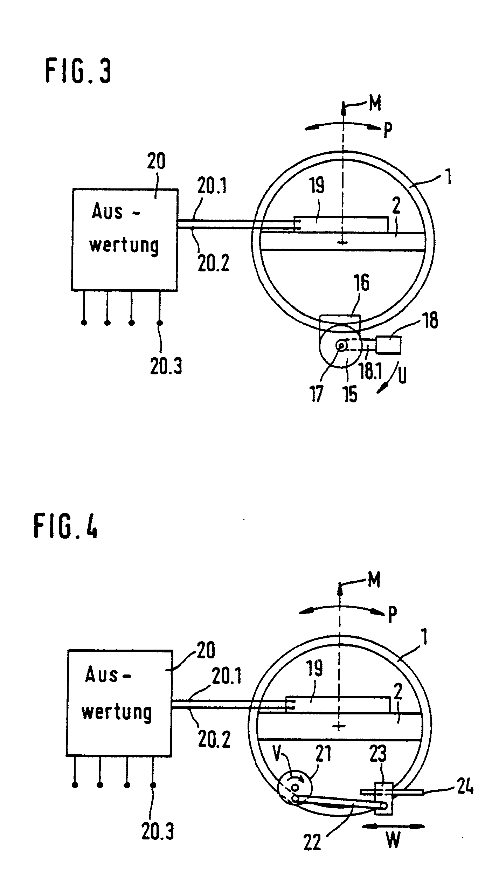

In den Fig. 3 bis 5 sind Vorrichtungen dargestellt, die keiner festen Abstützung an einem Punkt innerhalb oder außerhalb des Kraftfahrzeuges bedürfen, sondern nur direkt am Lenkrad befestigt werden.

Bei der Ausführungsform nach Fig. 3 ist ein Motor, beispielsweise ein Elektromotor 15, mittels einer Halterung 16 am Lenkrad 1 befestigt An seiner Abtriebswelle 17 ist über eine Halterung 18.1 eine träge Masse 18 befestigt. Wird der Motor in Drehung versetzt, so bewegt sich die träge Masse 18 als Unwucht auf einer Kreisbahn in Pfeilrichtung U und durch die Reaktionskräfte entsteht die gewünschte periodische Hin- und Herbewegung des Lenkrades in Pfeilrichtung P um die Mittelstellung M. Die Amplitude dieser Hin- und Herbewegung ist abhängig vom Abstand der trägen Masse 18 von ihrer Drehachse.

Die Einstellung der Lenkradspeiche 2 kann bei dieser Vorrichtung über eine Lenkradmeßwaage 19 erfolgen, die auf die Lenkradspeiche 2 aufgesetzt wird und elektrische Signale über Eingänge 20.1 und 20.2 an eine Auswertevorrichtung 20 abgibt. Auf diese Weise kann entweder die Lenkradspeiche 2 genau horizontal eingestellt werden oder es werden die bei der Bewegung erhaltenen Signale in der Auswertevorrichtung 20 zusammen mit den über Eingänge 20.3 zugeführten Meßwerten für die Spurvermessung verarbeitet.

In Fig. 4 ist eine Variante der Ausführungsform nach Fig. 3 dargestellt.

Der am Lenkrad 1 angeordnete Antriebsmotor trägt eine Exzenterscheibe 21, die über eine Schubstange 22 mit einer trägen Masse 23 verbunden ist, welche in einer ebenfalls am Lenkrad 1 angeordneten Führung 24 läuft. Eine Drehung der Exzenterscheibe in Pfeilrichtung V erzeugt eine Hin- und Herbewegung der trägen Masse 23 in Pfeilrichtung W und die auftretenden Reaktionskräfte erzeugen die Hin- und Herbewegung des Lenkrades 1 in Pfeilrichtung P um die Mittellage M. Die Einstellung der Lenkradspeiche 2 kann über die Lenkradmeßwaage 19, wie anhand von Fig. 3 beschrieben, erfolgen.

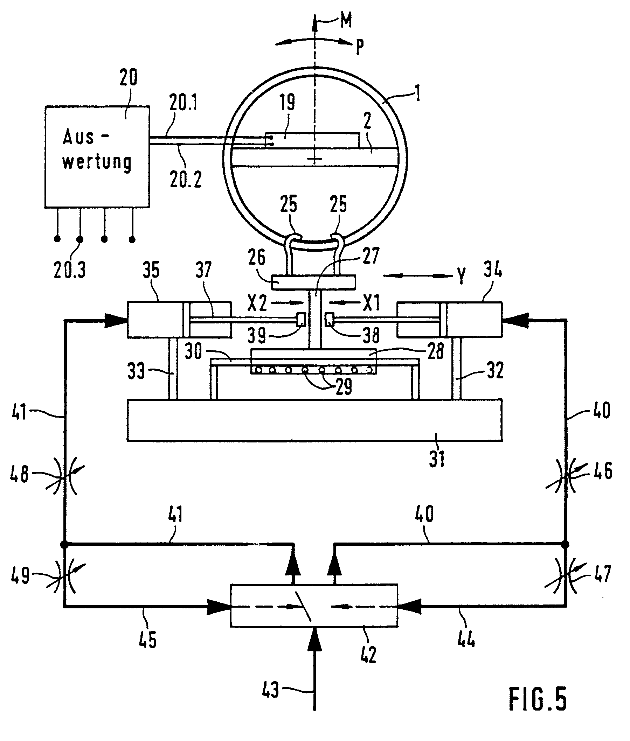

In Fig. 5 ist eine weitere Variante der Ausführungsform nach Fig. 3 dargestellt.

In das Lenkrad 1 ist über Hakenelemente 25 ein Bauteil 26 eingehängt, an dem über ein Verbindungselement 27 ein Rahmen 28 aufgehängt ist, in dem die Rollenführung 29 angeordnet ist, in welcher ein Schlitten 30 läuft, an dessen Enden eine träge Masse 31 aufgehängt ist. Die träge Masse 31 ist weiterhin über starre Verbindungselemente 32 und 33 mit zwei einfach wirkenden Pneumatikzylindern 34 und 35 verbunden, deren Kolbenstangen 36, 37 aufeinander zulaufen und sich über Pufferelemente 38 und 39 am Verbindungselement 27 abstützen.

Der Pneumatikzylinder 34 ist über eine Zuleitung 40 und der Pneumatikzylinder 35 über eine Zuleitung 41 mit einem beiden Pneumatikzylindern gemeinsamen Flip-Flop-Ventil 42 verbunden, an das eine Druckluftleitung 43 angeschlossen ist. Die Ansteuerung des Flip-Flop-Ventils 42 führt über Rückführungsleitungen 44 und 45. Zur genauen Justierung der Vorrichtung dienen Drosselventile 46, 47, 48 und 49.

Vom Flip-Flop-Ventil 42 aus werden die beiden Pneumatikzylinder 34 und 35 wechselweise angesteuert, so daß ihre Kolbenstangen wechselweise Bewegungen in den Pfeilrichtungen X1 und X2 ausführen. Diese Bewegungen werden über die Pufferelemente 38 und 39 auf das Verbindungselement 27 und damit sowohl auf den Rahmen 28 als auch auf das Bauteil 26 übertragen, welches eine Hin- und Herbewegung in Pfeilrichtung Y ausführt. Diese Hin- und Herbewegung überträgt sich über die Hakenelemente 25 auf das Lenkrad 1 und hat eine Hin- und Herbewegung des Lenkrades in Pfeilrichtung P um die Mittellage M zur Folge. Die Einstellung der Lenkradspeiche 2 erfolgt wie bei den oben beschriebenen Ausführungsformen über die Lenkradmeßwaage 19 und die erzeugten elektrischen Signale werden über Eingänge 20.1, 20.2 an die Auswertevorrichtung 20 weitergeleitet.

## Ansprüche

1. Verfahren zur Messung bzw. Einstellung der Vorderradeinzelspur bei Kraftfahrzeugen, dadurch gekennzeichnet, daß zur Eliminierung des Einflusses des Lenkungsspiels das Lenkrad während der Messung bzw. der Einstellung der Spur in eine um eine vorgegebene Mittellage herum periodisch hin- und hergehende Drehbewegung versetzt wird, deren Amplitude mindestens so groß ist wie der halbe Wert des Lenkungsspiels.

2. Verfahren nach Anspruch 1, dadurch gekennzeichnet, daß die Mittellage der periodisch hin- und hergehenden Drehbewegung so eingestellt wird, daß in dieser Mittellage die Lenkradspeiche horizontal steht.

3. Verfahren nach Anspruch 1, dadurch gekennzeichnet, daß die Mittellage der periodisch hin- und hergehenden Drehbewegung automatisch gemessen und ein die Meßwerte repräsentierendes elektrisches Signal einer Auswertevorrichtung zur Verarbeitung der Meßwerte für die Berechnung der Spur zugeführt wird, in der die Meßwerte für die Mittellage zusammen mit den Meßwerten für die Spur verarbeitet werden.

4. Einrichtung zur Durchführung des Verfahrens nach einem der Ansprüche 1 bis 3 mit einer Vorrichtung zur Messung bzw. Einstellung der Vorderradeinzelspur, gekennzeichnet durch eine am Kraftfahrzeug (5, 14) anbringbare Antriebsvorrichtung (3, 10, 15, 21, 34-35) zur Erzeugung einer periodischen Bewegung und eine Vorrichtung (8, 12, 16-18, 22-23-24, 36-37) zur Übertragung dieser periodischen Bewegung auf das Lenkrad als um eine Mittellage herum periodisch hin-und hergehende Drehbewegung mit vorgegebener Amplitude sowie eine Vorrichtung (9, 13, 15) zur Einstellung und/oder Messung der Mittellage des Lenkrades (1).

5. Einrichtung nach Anspruch 4, dadurch gekennzeichnet, daß die Antriebsvorrichtung (3) an einem festen Punkt (5) innerhalb oder außerhalb des Kraftfahrzeugs angeordnet ist und über ein im wesentlichen tangential am Lenkrad (1) angreifendes Koppelglied (8) mit dem Lenkrad (1) verbunden ist.

6. Einrichtung nach Anspruch 5, dadurch gekennzeichnet, daß die Antriebsvorrichtung einen Antriebsmotor (3) aufweist, der einen Exzenter (7) antreibt, welcher über das als Schubstange (8) ausgebildete Koppelglied mit dem Lenkrad (1) verbunden ist.

7. Einrichtung nach Anspruch 4, dadurch gekennzeichnet, daß die Antriebsvorrichtung (10) am Lenkrad (1) angeordnet ist und sich über ein Abstützglied (12) an einem festen Punkt (14) innerhalb oder außerhalb des Kraftfahrzeugs abstützt.

8. Einrichtung nach Anspruch 7, dadurch gekennzeichnet, daß die Antriebsvorrichtung einen Pneumatikzylinder (10) aufweist, dessen Kolben (11) sich über eine Schubstange (12) an einem festen Teil (14) des Kraftfahrzeugs abstützt.

9. Einrichtung nach Anspruch 4, dadurch gekennzeichnet, daß die Antriebsvorrichtung (15, 21, 34-35) am Lenkrad angeordnet ist und die hin- und hergehende Drehbewegung des Lenkrads durch periodisches Verlagern einer mit der Antriebsvorrichtung gekoppelten trägen Masse (18, 23, 31) aufgrund der auftretenden Reaktionskräfte erzeugt wird.

10. Einrichtung nach Anspruch 9, dadurch gekennzeichnet, daß die Antriebsvorrichtung einen Antriebsmotor (15) aufweist, an dessen Abtriebswelle (17) exzentrisch die träge Masse (18) angeordnet ist.

11. Einrichtung nach Anspruch 9, dadurch gekennzeichnet, daß die Antriebsvorrichtung einen Antriebsmotor aufweist, der einen Exzenter (21) antreibt, welcher über eine Schubstange (22) mit der verschiebbar geführten trägen Masse (23) verbunden ist.

12. Einrichtung zur Durchführung des Verfahrens nach einem der Ansprüche 1 bis 3 mit einer Vorrichtung zur Messung bzw. Einstellung der Vorderradeinzelspur, gekennzeichnet durch eine Antriebsvorrichtung zur Erzeugung einer periodischen Bewegung und eine Vorrichtung zur Übertragung dieser periodischen Bewegung auf die Lenkradachse des Kraftfahrzeugs als um eine Mittellage herum periodisch hin-und hergehende Drehbewegung mit vorgegebener Amplitude sowie eine Vorrichtung zur Einstellung und/oder Messung der Mittellage des Lenkrades.

13. Einrichtung zur Durchführung des Verfahrens nach einem der Ansprüche 1 bis 3 mit einer Vorrichtung zur Messung bzw. Einstellung der Vorderradeinzelspur, gekennzeichnet durch eine Antriebsvorrichtung zur Erzeugung einer periodischen Bewegung und eine Vorrichtung zur Übertragung dieser periodischen Bewegung auf die Spurstange des Kraftfahrzeuges zur Erzeugung einer um eine Mittellage herum periodisch hin- und hergehenden Drehbewegung des Lenkrads mit vorgegebener Amplitude sowie eine Vorrichtung zur Einstellung und/oder Messung der Mittellage des Lenkrades.

## Claims

1. Method of measuring or setting the individual front-wheel track in motor vehicles, characterised in that, to eliminate the influence of the steering play, the steering wheel, during the measuring or setting of the track, is set in a rotary movement which reciprocates periodically around a predetermined centre position and whose amplitude is at least as large as half the value of the steering play.

2. Method according to Claim 1, characterised in that the centre position of the periodically reciprocating rotary movement is set in such a way that the steering-wheel spoke is horizontal in this centre position.

3. Method according to Claim 1, characterised in that the centre position of the periodically reciprocating rotary movement is automatically measured, and an electrical signal representing the measured values is fed to an analysing device for processing the measured values for calculating the track, in which analysing device the measured values for the centre position are processed together with the measured values for the track.

4. Apparatus for carrying out the method according to one of Claims 1 to 3, having a device for measuring or setting the individual front-wheel track, characterised by a drive device (3, 10, 15, 21, 34-35) which can be attached to the motor vehicle (5, 14) and is intended for producing a periodic movement and by a device (8, 12, 16-18, 22-23-24, 36-37) for transmitting this periodic movement to the steering wheel as a rotary movement periodically reciprocating around a centre position and having a predetermined amplitude, and also by a device (9, 13, 15) for setting and/or measuring the centre position of the steering wheel (1).

5. Apparatus according to Claim 4, characterised in that the drive device (3) is arranged at a fixed point (5) inside or outside the motor vehicle and is connected to the steering wheel (1) via a coupling member (8) acting essentially tangentially on the steering wheel (1).

6. Apparatus according to Claim 5, characterised in that the drive device has a drive motor (3) which drives an eccentric (7) which is connected to the steering wheel (1) via the coupling member designed as a connecting rod (8).

7. Apparatus according to Claim 4, characterised in that the drive device (10) is arranged on the steering wheel (1) and is supported at a fixed point (14) inside or outside the motor vehicle via a supporting member (12).

8. Apparatus according to Claim 7, characterised in that the drive device has a pneumatic cylinder (10) whose piston (11) is supported at a fixed point (14) of the motor vehicle via a connecting rod (12).

9. Apparatus according to Claim 4, characterised in that the drive device (15, 21, 34-35) is arranged on the steering wheel, and the reciprocating rotary movement of the steering wheel is produced by periodic displacement of an inert mass (18, 23, 31) on account of the reaction forces occurring, which inert mass (18, 23, 31) is coupled to the drive device.

10. Apparatus according to Claim 9, characterised in that the drive device has a drive motor (15) on whose output shaft (17) the inert mass (18) is eccentrically arranged.

11. Apparatus according to Claim 9, characterised in that the drive device has a drive motor which drives an eccentric (21) which is connected via a connecting rod (22) to the displaceably guided inert mass (23).

12. Apparatus for carrying out the method according to one of Claims 1 to 3, having a device for measuring or setting the individual front-wheel track, characterised by a drive device for producing a periodic movement and a device for transmitting this periodic movement to the steering-wheel axis of the motor vehicle as a rotary movement periodically reciprocating around a centre position and having a predetermined amplitude, and also by a device for setting and/or measuring the centre position of the steering wheel.

13. Apparatus for carrying out the method according to one of Claims 1 to 3, having a device for measuring or setting the individual front-wheel track, characterised by a drive device for producing a periodic movement and a device for transmitting this periodic movement to the track rod of the motor vehicle for producing a steering-wheel rotary movement periodically reciprocating around a centre position and having a predetermined amplitude, and also by a device for setting and/or measuring the centre position of the steering wheel.

## Revendications

1. Procédé pour mesurer et régler l'alignement de chacune des roues avant de véhicules automobiles, caractérisé par le fait que, pour éliminer l'effet exercé par le jeu de la direction, un mouvement rotatif de va-et-vient périodique autour d'une position centrale prédéterminée est imprimé au volant pendant la mesure du réglage, l'amplitude de son mouvement étant au moins égale à la moitié de la valeur du jeu de la direction.

2. Procédé selon la revendication 1, caractérisé par le fait que la position centrale du mouvement rotatif de va-et-vient périodique est réglé de telle sorte que, dans cette position centrale, le rayon du volant est resté placé horizontalement.

3. Procédé selon la revendication 1, caractérisé par le fait que la position centrale du mouvement rotatif de va-et-vient périodique est mesuré automatiquement et qu'un signal électrique représentant les valeurs mesurées est amené vers un dispositif d'analyse en vue du traitement des valeurs mesurées pour le calcul de l'alignement, dispositif dans lequel les valeurs mesurées concernant la position centrale sont traitées en même temps que les valeurs mesurées concernant l'alignement.

4. Dispositif pour la mise en oeuvre du procédé selon l'une des revendications 1 à 3 comportant un dispositif pour la mesure et le réglage de l'alignement de chacune des roues avant, caractérisé par le fait qu'il comprend un dispositif d'entraînement (3, 10, 15, 21, 34-35) pouvant être monté sur le véhicule automobile (5, 14) en vue de générer un mouvement périodique et un dispositif (8, 12, 16, 18, 22-23-24, 36-37) pour le transfert de ce mouvement périodique sur le volant sous la forme d'un mouvement rotatif de va-et-vient périodique autour d'une position centrale d'une amplitude prédéterminée, ainsi qu'un dispositif (9, 13, 15) pour le réglage et/ou la mesure de la position centrale du volant (1).

5. Dispositif selon la revendication 4, caractérisé par le fait que le dispositif d'entraînement (3) est disposé en un point fixe (5) à l'intérieur ou à l'extérieur du véhicule automobile et est relié au volant (1) par un élément d'accouplement (8) agissant sensiblement tangentiellement sur le volant (1).

6. Dispositif selon la revendication 5, caractérisé par le fait que le dispositif d'entraînement présente un moteur d'entraînement (3) qui entraîne un excentrique (7) lequel est relié au volant (1) par l'élément d'accouplement réalisé sous forme de biellette (8).

7. Dispositif selon la revendication 4, caractérisé par le fait que le dispositif d'entraînement (10) est disposé sur le volant (1) et s'appuie au moyen d'un élément de renfort (12) sur un point fixe (14) placé à l'intérieur ou à l'extérieur du véhicule automobile.

8. Dispositif selon la revendication 7, caractérisé par le fait que le dispositif d'entraînement présente un cylindre pneumatique (10) dont le piston (11) s'appuie, par une bielle (12), sur une partie fixe (14) du véhicule automobile.

9. Dispositif selon la revendication 4, caractérisé par le fait que le dispositif d'entraînement (15, 21, 34-35) est disposé sur le volant et que le mouvement rotatif en va et vient du volant est généré par le déplacement périodique d'une masse inerte (18, 23, 31) accouplée au dispositif d'entraînement en raison des forces réactionnelles produites.

10. Dispositif selon la revendication 9, caractérisé par le fait que le dispositif d'entraînement présente un moteur d'entraînement (15) sur l'arbre d'entraînement (17) duquel est disposé excentriquement la masse inerte (18).

11. Dispositif selon la revendication 9, caractérisé par le fait que le dispositif d'entraînement présente un moteur d'entraînement qui entraîne l'excentrique (21), lequel est relié par une bielle (22) à la masse inerte (23) montée de manière mobile.

12. Dispositif pour la mise en oeuvre du procédé selon l'une des revendications 1 à 3 comportant un dispositif pour la mesure ou le réglage de l'alignement de chacune des roues avant caractérisé par le fait qu'il comprend un dispositif d'entraînement pour la génération d'un mouvement périodique et un dispositif pour le transfert de ce mouvement périodique sur l'axe du volant du véhicule automobile sous la forme d'un mouvement rotatif de va-et-vient périodique, à amplitude prédéterminée, ainsi qu'un dispositif pour le réglage et/ou la mesure de la position centrale du volant.

13. Dispositif pour la mise en oeuvre du procédé selon l'une des revendications 1 à 3, comportant un dispositif pour mesurer ou régler l'alignement de chacune des roues avant, caractérisé par le fait qu'il comprend un dispositif d'entraînement pour la génération d'un mouvement périodique et un dispositif pour la transmission de ce mouvement périodique sur la barre d'accouplement du véhicule en vue de générer un mouvement rotatif de va-et-vient périodique autour d'une position centrale du volant, à amplitude prédéterminée, ainsi qu'un dispositif pour le réglage et/ou la mesure de la position centrale du volant.

FIG.1

FIG.2

FIG.3

FIG.4

FIG.5